# EUROPEAN PATENT SPECIFICATION

(11) **EP 3 932 876 B1**
(45) Date of publication and mention of the grant of the patent: **28.08.2024**
(21) Application number: 20382575.7
(22) Date of filing: 30.06.2020
(51) Int. Cl.: C03B 9/347, B07C 5/34, B29C 45/37, C03B 9/41, G06K 7/10

(54) **METHOD FOR IDENTIFYING THE CAVITY OF A GLASS CONTAINER FORMING MACHINE IN WHICH A GLASS CONTAINER HAS BEEN MANUFACTURED**
VERFAHREN ZUM IDENTIFIZIEREN DES HOHLRAUMS EINER MASCHINE ZUM FORMEN VON GLASBEHÄLTERN, IN DER EIN GLASBEHÄLTER HERGESTELLT WORDEN IST
PROCÉDÉ D'IDENTIFICATION DE LA CAVITÉ D'UNE MACHINE DE FORMATION DE RÉCIPIENTS EN VERRE DANS LAQUELLE UN RÉCIPIENT EN VERRE A ÉTÉ FABRIQUÉ

(43) Date of publication of application: 05.01.2022
(73) Proprietor: Vidrala, S.A., 01400 Llodio (ES)
(72) Inventor: IRIZAR GONZALEZ, Liher, 01400 Llodio (ES); MENOYO LARRAZABAL, Joseba, 01400 Llodio (ES)
(74) Representative: Igartua, Ismael

(56) References cited:
- GB-A- 2 094 530
- US-A- 3 923 158
- US-A- 4 691 830

## Description

### TECHNICAL FIELD

The present invention is related to manufacturing glass containers in forming machines having several cavities in which the glass containers are manufactured. The containers have a molded code indicating the cavity of the machine in which the container has been manufactured.

### PRIOR ART

Glass containers are manufactured in multiple section forming machines (referred to as IS machines) in a glass container production line. Each section has at least one cavity in which a glass container is manufactured. A code is molded into each container, said code being used as a traceability element for the glass container along the production line, and indicating the cavity in which the glass container has been manufactured.

After being manufactured, the containers are inspected to locate defects, and in the event that a container is defective, by reading the code molded into the container, the cavity of the forming machine in which the container has been manufactured can be detected, and therefore, measures can be taken to fix problems associated with that cavity.

EP256804A2 shows a method for identifying the cavity of a glass container forming machine in which a glass container has been manufactured, which method comprises manufacturing a set of glass containers, wherein each of the glass containers has a code which identifies the cavity of the forming machine in which the glass container has been manufactured.

US3923158A shows a bottle making machine provided with a plurality of inspection stations which inspect bottles on line to provide information for rejecting faulily made bottles. Each mould produces in the respective containers, identifications unique to the moulds. A first inspection station include means for reading the moulded identifications of the container and transmitting identification signals related to the read identifications, a second inspection station including means for detecting flaws in the moulded containers and for transmitting flaw indicating signals. Means guide moulded containers serially through the inspection stations and registering means receiving the flaw indicating signals and the identification signals register which of the moulds is producing faulty containers.

GB2094530A shows a finished product controller for monitoring the performance of a glassware production line and the bottle inspection equipment operating thereon. Bottles are fed to one of several inspection loops. A primary inspection loop inspects the bottles fed to it for defects and reads mould identifying codes on those bottles. One or more secondary inspection loops inspect the rest of the bottles for defects. A computer correlates defects detected in the primary loop to the defective mould which produced them and acquires defect data from the secondary loops. A cavity reject ratio is calculated for each defect and compared with a predetermined value to alert a forming operator to a defective cavity. The reject ratios are totalled for each defect and the ratio for each defect from the different loops are compared to identify malfunctioning inspection devices.

US4691830A shows a system for inspection and sorting of molded containers as a function of mold cavity of container origin. System comprises an inspection device, a cavity identifier, a sample tester and control devices for receiving information identifying mould of origin of defective containers and automatically sorting a preselected sample of containers from each cavity and routing them to the sample tester.

### DISCLOSURE OF THE INVENTION

The object of the invention is to provide a method for identifying the cavity of a glass container forming machine in which a glass container has been manufactured, as defined in the claims.

An aspect of the invention relates to a method for identifying the cavity of a glass container forming machine in which a glass container has been manufactured, which comprises manufacturing a set of glass containers, wherein each of the glass containers has a code which identifies the cavity of the forming machine in which the glass container has been manufactured.

The method additionally comprises:
- for each container of the set of glass containers:
   ∘ determining a characteristic parameter of the glass container, and
   ∘ reading the code which identifies the cavity of the forming machine in which the glass container has been manufactured,
- performing a classification of the set of glass containers which comprises:
   ∘ relating each glass container with its characteristic parameter, and
   ∘ relating each characteristic parameter with the cavity of the forming machine in which the glass container has been manufactured,
- manufacturing a new glass container,
- determining the characteristic parameter of the new glass container, and
- comparing the characteristic parameter of the new glass container with the classification of the set of glass containers, and identifying the cavity in which the new glass container has been manufactured based on said comparison.

Accordingly, the method allows classifying the glass containers that have been manufactured in each cavity of the forming machine from a characteristic parameter of the glass container. The cavity of the forming machine in which the glass container has been manufactured can therefore be identified without needing to use the code which is molded into the container, but rather the cavity from which a container originates can simply be identified from the characteristic parameter of the container.

The source cavity in which a container has been manufactured can thereby be known, even if at some point there was a failure in the reading of the code. A failure in the reading may occur for several reasons, for example, the reader used for the reading may fail from time to time, the container may be dirty preventing the reading, or the code may have been molded erroneously due to deterioration of the forming machine.

These and other advantages and features of the invention will become apparent in view of the figures and the detailed description of the invention.

### DESCRIPTION OF THE DRAWINGS

Figure 1 shows a diagram of a glass container production line in which the method of the invention is carried out.
Figure 2 shows a diagram of a double-gob twelve-section container forming machine.
Figure 3 shows a diagram of part of the inspection area of the container production line in which the wall thickness of the container is determined, and the code which identifies the cavity of the forming machine in which the container has been manufactured is also determined.
Figure 4 shows an exemplary table with data used to perform the classification of the set of glass containers.

### DETAILED DISCLOSURE OF THE INVENTION

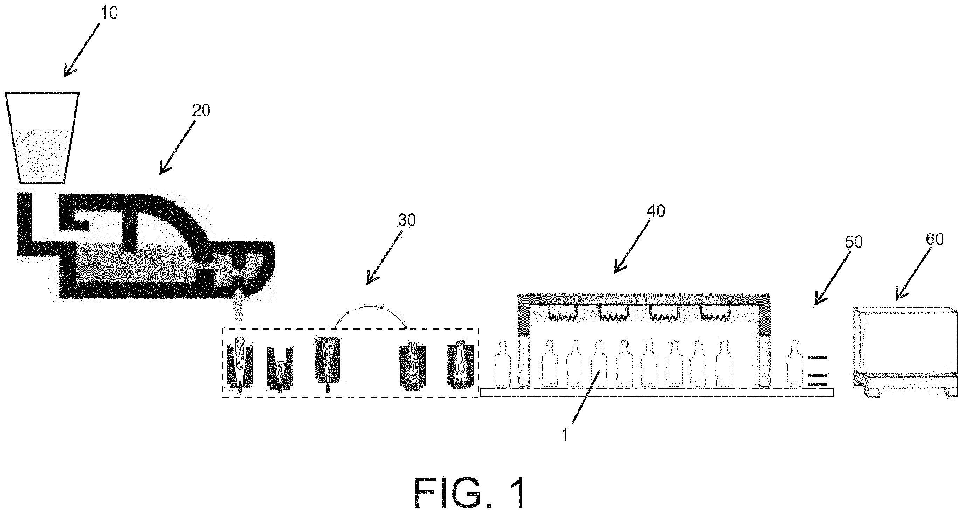

Figure 1 shows an example of a production line for producing glass containers 1. The line comprises a raw material receiving area 10 in which the raw materials with which the glass containers 1 are manufactured are received, a melt area 20 in which the raw materials are melted to generate molten glass, a forming area 30 in which the molten glass is transformed into containers 1, a treatment area 40 in which the containers 1 are thermally and surface treated to prevent the formation of internal stresses and provide the glass with a higher strength grade, an inspection area 50 in which dimensional, functional, and defect controls are performed on the containers 1 to check that they meet the required quality standards, and a final packing area 60 in which the containers 1 are grouped onto pallets for storage and transport.

Raw materials are received in the receiving area 10 and by means of conveyor belts are taken to hoppers supplying the raw materials to the melt area 20, where there is a melting furnace in which the raw materials are melted at temperatures higher than 1,000°C by means of burners. The molten glass is supplied in the form of gobs to the forming area 30 by means of feeder channels, one container 1 being obtained with each gob of molten glass.

The transformation of the molten glass into glass containers, in the forming area 30, is performed with multiple section forming machines (referred to as IS machines) which have a longitudinal arrangement with sections S arranged in parallel, in which each section S receives gobs of molten glass, and each gob is introduced in a cavity, or mold, of said section S, one container 1 being obtained with each gob of molten glass. The glass containers are manufactured by means of a series of known pressure, pressing, vacuum, and blow processes.

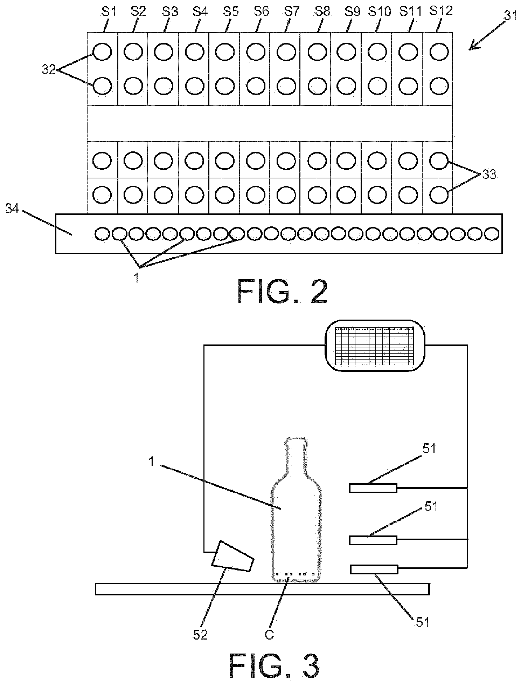

Figure 2 shows a forming machine 31 for forming glass containers 1 having twelve sections independent S1 to S12, each of which has two blank molds 32 and two blow molds 33. Two gobs of molten glass are prepared and charged in the blank molds 32, in which by means of extrusion or blowing a parison (also referred to as a preform) of the glass container 1 is obtained. The parisons are transferred by means of turning over into the blow molds 33, where the parisons are blown to obtain the final configuration of the glass containers 1. Therefore, in one double-gob twelve-section forming machine twenty-four glass containers 1 are manufactured for each cycle. Once the final configuration of the glass containers 1 is obtained, the containers 1 are sent to a conveyor belt 34, where they form a row of containers 1 heading towards the treatment area 40.

The blow mold 33 of each section S of the forming machine 31 has a code C which is molded into the glass container 1. In the sense of the present invention, the blow mold 33 in which the code C is molded is referred to as cavity 33.

Said code C is used to identify the section S of the forming machine in which the glass container 1 has been manufactured, and more specifically the mold, or cavity 33, in which it has been manufactured. Generally, the code C is a series of raised dots molded in the lower part of the glass container 1.

The grouped containers 1 are sent to the treatment area 40 which has an annealing lehr separating the container production line into a hot area and a cold area. The hot area extends from the furnace of the melt area 20 to the annealing lehr of the treatment area 40, and the cold area extends from the annealing lehr of the treatment area 40 to the end of the production line, in the final packing area 60.

Therefore, at the outlet of the forming machine 31, the containers 1 are at a temperature of about 650°C, and to prevent the formation of internal stresses, they are taken to the annealing lehr, which the containers 1 go through slowly, being reheated and then cooled. The containers are subjected to different treatments in the treatment area 40.

The containers 1 are then transferred to the inspection area 50 where dimensional, functional, and defect controls are performed on the containers 1 to check that they meet the required quality standards. Different characteristic parameters of the glass containers 1 are examined in the inspection area 50.

Figure 3 shows part of the inspection area 50 where the characteristic parameter of the glass containers being examined is the wall thickness of the glass container 1.

The inspection is performed in rotating machines in which the glass containers 1 are arranged opposing thickness gauges 51 determining the wall thickness of the glass container 1 at different heights. A code reader 52 is arranged in the same part of the inspection area 50 for reading the code C which identifies the cavity 33 of the forming machine 31 in which the glass container 1 has been manufactured. Therefore, in the moment in which the wall thickness of the glass container 1 is determined, the cavity 33 of the forming machine 31 in which the container has been manufactured is identified. With each rotation of the rotating machine, the thickness of a container 1 is measured and its code C is also read.

For each glass container 1, from the readings taken at each height with the corresponding thickness gauge 51, a minimum thickness value (min), a maximum thickness value (max), a mean thickness value (mean), and an out-of-roundness value (oor) are obtained.

The measured thickness values are compared with minimum thickness values, and if the glass container 1 does not comply with said minimum values, it is rejected, the rejected container being used as raw material to form new containers. The cavity 33 of the machine in which the container has been manufactured is identified by means of the reading of the code C, and the relevant corrective measures are accordingly taken. However, the reading of the code C may fail from time to time, such that, in that event, it is impossible to determine the cavity 33 of the forming machine 31 in which the container 1 has been manufactured, and therefore, there is a container 1 in the production line with a defect in respect of which the cavity 33 in which it has been manufactured is unknown.

The invention proposes a method which allows identifying the cavity 33 of the forming machine 31 in which a glass container 1 has been manufactured from a characteristic parameter of the glass container 1, such that the cavity 33 in which a container 1 has been manufactured may be identified without needing to read its code C.

The method comprises manufacturing a set of glass containers 1, wherein each of the glass containers 1 has a code C which identifies the cavity 33 of the forming machine 31 in which the glass container 1 has been manufactured.

The method additionally comprises:
- for each container 1 of the set of glass containers 1:
   ∘ determining a characteristic parameter of the glass container 1, and
   ∘ reading the code C which identifies the cavity 33 of the forming machine 31 in which the glass container 1 has been manufactured,
- performing a classification of the set of glass containers 1 which comprises:
   ∘ relating each glass container 1 with its characteristic parameter, and
   ∘ relating each characteristic parameter with the cavity 33 of the forming machine 31 in which the glass container 1 has been manufactured,
- manufacturing a new glass container 1,
- determining the characteristic parameter of the new glass container 1, and
- comparing the characteristic parameter of the new glass container 1 with the classification of the set of glass containers 1, and identifying the cavity 33 in which the new glass container 1 has been manufactured based on the comparison of the characteristic parameters.

The classification of the set of glass containers 1 and the comparison of the characteristic parameter of the new glass container 1 with the classification of the set of glass containers 1 is performed by means of a machine learning system, using a supervised learning algorithm.

The supervised learning algorithm establishes a correspondence between the inputs and outputs of the machine learning system. The inputs of the system are the characteristic parameters of the containers 1, and the outputs are the cavities 33 of the forming machine 31 in which the containers 1 have been manufactured. The algorithm thereby classifies the containers 1 based on their characteristic parameter and can predict the cavity 33 in which a container 1 has been manufactured from the characteristic parameter.

The characteristic parameter may be any physical characteristic of the container that is unique to said container. The cavities 33 of the machine 31 generate glass containers 1 with similar physical characteristics. Those characteristics may be the wall thickness of the container, out-of-roundness, verticality, gauge, cracks, etc.

To classify the containers 1 based on their characteristic parameter, one of the following supervised learning algorithms may be used. How the algorithms work is not described in detail since they are already known. In any case, the algorithm uses input values, in this case a characteristic parameter of the containers 1, and generates output values, in this case the cavity 33 in which the containers 1 have been manufactured.
- Support vector machines (SVM).
- KNN (K-nearest neighbors).
- Linear classifiers of the logistic regression type or Naive Bayes classifiers.
- Decision trees.
- Neural networks.

When a new glass container 1 is manufactured, the method of the invention comprises determining the characteristic parameter of the new glass container 1, and comparing said characteristic parameter of the new glass container 1 with the classification of the set of glass containers 1. The machine learning system thereby compares the characteristic parameter of the new glass container 1 with the characteristic parameters of the set of glass containers 1 which are related with the cavities 33, and based on said comparison of the characteristic parameters, the learning system identifies the cavity 33 in which the new glass container 1 has been manufactured.

That is, the characteristic parameter of the new glass container 1 is compared with all the characteristic parameters of the classification of the set of glass containers 1, and the cavity 33 of the forming machine 31 having the characteristic parameter closest to the characteristic parameters of the set of glass containers 1 of the classification is assigned to the new glass container.

Additionally, the method comprises reading the code C of the new glass container 1 which identifies the cavity 33 in which the new container 1 has been manufactured, and comparing said code C with the cavity 33 which has been identified with the method from the comparison of the characteristic parameter of the new glass container 1 with the characteristic parameters of the set of glass containers 1 of the classification.

That is, when the code reader 52 does not fail and works correctly identifying the cavity 33 in which the new glass container 1 has been manufactured, the characteristic parameter of the new glass container 1 is likewise compared with all the characteristic parameters of the classification. The method may therefore be used to confirm that the code reader 52 is correctly identifying the cavity 33. Moreover, said comparison allows checking if the cavity 33 in which the new glass container 1 has been manufactured is from the current production or from a different production, which is particularly relevant to know the yield of the production line. Additionally, such comparison allows detecting other special situations of the production line, such as, for example, a cavity 33 having been lubricated, a mold 33 having been changed (therefore the conditions of a cavity 33 having been modified), etc.

For example, containers 1 that do not correspond with the current production underway may be incorporated in the production line, which causes the production yield data to be incorrect. For example, a random number of containers 1 may be selected to take them to an inspection room separated from the production line, and once they have been inspected, they are returned to the production line. A set of containers that have been rejected by a client may also be incorporated in the production line in order to inspect them again in the inspection area 50. Therefore, the method allows identifying these containers and correcting the production yield data. The learning system has historical data of past productions which also allow identifying the cavity 33 in which said containers 1 have been manufactured.

The learning system is preferably iterative, since the glass molding process usually varies over time, affecting the glass thickness distribution slowly but progressively. There may also be instantaneous changes in the event that molds are replaced, programs changed, or due to other factors.

Therefore, the classification of the set of glass containers 1 is preferably dynamic, wherein the characteristic parameter of each new manufactured glass container 1 is added to the classification, and the characteristic parameter of each new glass container 1 is related with the cavity 33 of the forming machine 31 in which each new glass container 1 has been manufactured. Alternatively, only part of the new manufactured containers 1 is added to the classification. That is, not all of the new manufactured containers 1 reaching the inspection area 50 are added, but rather a sampling of said new containers 1 is taken.

The classification is a database of the glass containers 1 having data about the characteristic parameters of the containers 1 related with the cavities 33 of the forming machine 31. The database has a number of positions, as many as the glass containers 1 in the database. As previously indicated, said database is dynamic, the characteristic parameter of each new manufactured glass container 1 being stored in the database, and relating the characteristic parameter with the cavity 33 of the forming machine in which the glass container 1 has been manufactured. That is, the database includes thickness values of the last glass containers 1 manufactured.

Even more preferably, the characteristic parameter of a new manufactured glass container 1 is stored in the last position of the classification of the set of glass containers 1, and the characteristic parameter of the glass container 1 in the first position of the classification is removed from the classification. That is, the characteristic parameter of the new manufactured glass container is stored in the last position of the database, and the characteristic parameter of the first glass container stored in the first position of the database is removed from the database. The characteristic parameters of the new glass containers 1 being manufactured, together with the reading of the code C of the cavity 33 in which they have been manufactured, are thereby saved in the database replacing the oldest values. The database thereby includes updated values which reliably represent the current production of containers 1 being manufactured.

Preferably, the set of glass containers 1 is obtained from manufacturing at least 10 glass containers 1 for each cavity 33 of the forming machine 31. However, the higher the number of glass containers 1 manufactured in each cavity 33 is, the larger the data set there will be for training the learning system, but at the same time there will be data about containers 1 that differ from one another by their distance over time (due to the changes occurring in the production process). Accordingly, it has experimentally been observed that the best results of the learning system are obtained from manufacturing between 200-250 glass containers 1 for each cavity 33 of the forming machine 31.

As previously indicated, it is advisable to perform the classification by taking data from one and the same production, and to perform a new classification when the production conditions change. Therefore, the classification is preferably updated by storing new values of characteristic parameters when the production conditions of the containers 1 change.

When the production conditions of the containers are known beforehand, the classification can be updated at a pre-established set frequency. That is, by knowing the conditions of the production line, a fixed number of the set of containers manufactured from which a new classification is performed again can be assigned.

Alternatively, if the hit ratio of the learning system goes below a predefined threshold, the classification is updated again. As previously indicated, the method comprises reading the code C of a new manufactured container 1, and comparing said code C with the cavity 33 which has been identified with the method, such that the hit ratio of the method can thereby be verified. This is possible because the code reader 52 does not continuously fail, but rather failures are from time to time.

That is, the method allows identifying the cavity of the forming machine in which a container has been manufactured from the characteristic parameters without having to use the code C, but the hit of the method may be verified by reading the code C which identifies the cavity 33. The hit percentage of the learning system may thus be known, such that if the hit percentage drops, it is a consequence of the fact that the values of the classification do not correspond with actual manufacturing conditions, and that it is therefore necessary to update the classification.

Preferably the characteristic parameter is the wall thickness of the glass container 1. The thickness gauge 51 of the inspection area 50 is used to determine the thickness, such that the already installed equipment of the production line for producing glass containers 1 is used.

Alternatively, the characteristic parameter which is used to classify the containers 1 based on the cavity 33 in which they have been manufactured may be another parameter that is unique to each container. For example, the inputs of the learning system that are used to characterize the cavities 33 can be the wall thickness, out-of-roundness, verticality of the container, it can be cracks in the container, the gauge, etc.

Different characteristic parameters of the glass containers 1 which are conventionally measured in the inspection area 50 may thereby be used, wherein dimensional, functional, and defect controls are performed on the containers 1 to check that they meet the required quality standards.

Preferably, the thickness is determined at different heights of the glass container. Even more preferably, minimum thickness (min), maximum thickness (max), mean thickness (mean), and out-of-roundness (oor) of the glass container 1 are determined. The measurements taken in the inspection area 50 are thus utilized to obtain a footprint with which the glass container 1 is characterized, such that said footprint is used as an additional element, in addition to the code C, for identifying the cavity 33 in which the container 1 has been manufactured.

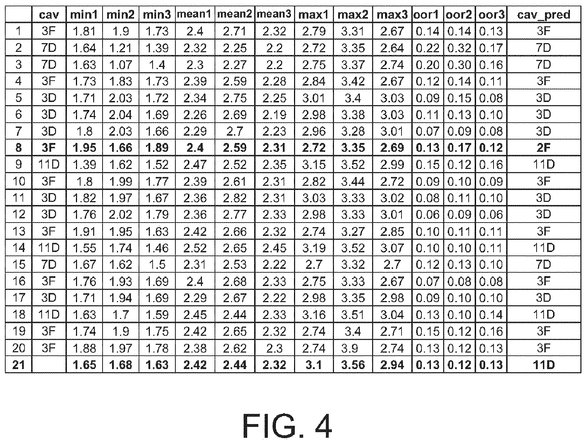

Figure 4 shows an exemplary table with the data used to perform the classification of the set of glass containers. The table shows an example with 21 containers, wherein each container has thickness and out-of-roundness values which are related with the cavity 33. For the sake of clarity, data pertaining to only 4 of the 24 cavities of the forming machine is shown.

The table includes minimum thickness (min), maximum thickness (max), mean thickness (mean), and out-of-roundness (oor) values for each of the three heights of the glass container which are measured with the corresponding thickness gauge 51, as well as the cavity (cav) of the forming machine 31 identified with the code reader 52, and the cavity predicted (cav_pred) with the method.

It can be observed in position 21 of the table that the code reader 52 has not identified a cavity. By using a supervised learning algorithm, the learning system determines that the thickness and out-of-roundness values of the container in position 21 correspond with cavity 11D, due to its similarity to the containers produced in that cavity.

When the code reader 52 fails, the thickness and out-of-roundness values of that container are not always used in the classification, because in the first few moments in which the containers are being characterized, the learning system may not have a good enough hit ratio, and therefore, if that data is included in the classification, a cavity may be erroneously characterized.

It can be observed in position 8 of the table that the code reader 52 has read the cavity 3F, but, however, the supervised learning algorithm has predicted that the thickness and out-of-roundness values of the container in position 9 correspond with cavity 2F. In this case, the learning system may have failed; however, when the hit ratio of the system is high enough, this difference between the cavity read by the reader (cav) and the cavity predicted by the learning system (cav_pred) is due to the fact that the container in position 9 of the table corresponds with a container manufactured in a different production.

As occurs in the preceding case, when a container which has been manufactured in a previous production is detected, the thickness and out-of-roundness values of that container are not used in the classification from the current production.

By using the historical data of past productions of the learning system, the cavity in which the container in position 9 has been produced can be identified.

## Claims

1. Method for identifying the cavity of a glass container forming machine in which a glass container has been manufactured, which comprises manufacturing a set of glass containers (1), wherein each of the glass containers (1) has a code (C) which identifies the cavity (33) of the forming machine (31) in which the glass container (1) has been manufactured, **characterized in that** the method comprises:
• for each container (1) of the set of glass containers (1):
∘ determining a characteristic parameter of the glass container (1), and
∘ reading the code (C) which identifies the cavity (33) of the forming machine (31) in which the glass container (1) has been manufactured,
• performing a classification of the set of glass containers (1) which comprises:
∘ relating each glass container (1) with its characteristic parameter, and
∘ relating each characteristic parameter with the cavity (33) of the forming machine (31) in which the glass container (1) has been manufactured,
• manufacturing a new glass container (1),
• determining the characteristic parameter of the new glass container (1), and
• comparing the characteristic parameter of the new glass container (1) with the classification of the set of glass containers (1), and identifying the cavity (33) in which the new glass container (1) has been manufactured based on said comparison.

2. Method according to claim 1, wherein the classification of the set of glass containers (1) and the comparison of the characteristic parameter of the new glass container (1) with the classification of the set of glass containers (1) is performed by means of a machine learning system using a supervised learning algorithm.

3. Method according to claim 1 or 2, wherein the characteristic parameter of the new glass container (1) is compared with all the characteristic parameters of the classification of the set of glass containers (1), and the cavity (33) of the forming machine (31) having the characteristic parameter closest to the characteristic parameters of the set of glass containers (1) of the classification is assigned to the new glass container (1).

4. Method according to any of the preceding claims, which additionally comprises reading the code (C) of the new glass container (1) which identifies the cavity (33) in which the new container (1) has been manufactured, and comparing said code (C) with the cavity (33) which has been identified with the method from the comparison of the characteristic parameter of the new glass container (1) with the characteristic parameters of the set of glass containers (1) of the classification.

5. Method according to any of the preceding claims, wherein the classification of the set of glass containers (1) is dynamic, wherein the characteristic parameter of each new manufactured glass container (1) is added to the classification, and the characteristic parameter of each new glass container (1) is related with the cavity (33) of the forming machine (31) in which each new glass container (1) has been manufactured.

6. Method according to the preceding claim, wherein the characteristic parameter of a new manufactured glass container (1) is stored in the last position of the classification of the set of glass containers (1), and the characteristic parameter of the glass container (1) in the first position of the classification is removed from the classification.

7. Method according to any of the preceding claims, wherein the set of glass containers (1) is obtained from manufacturing at least ten glass containers (1) for each cavity (33) of the forming machine (31).

8. Method according to the preceding claim, wherein the set of glass containers (1) is obtained from manufacturing between 200-250 glass containers (1) for each cavity (33) of the forming machine (31).

9. Method according to any of the preceding claims, wherein the classification is updated by storing new values of characteristic parameters when the production conditions of the containers (1) change.

10. Method according to any of the preceding claims, wherein the characteristic parameter is the wall thickness of the glass container (1).

11. Method according to the preceding claim, wherein the thickness is determined at different heights of the glass container (1).

12. Method according to claim 10 or 11, wherein minimum thickness, maximum thickness, and mean thickness are determined.

13. Method according to any of the preceding claims, wherein the characteristic parameter is the out-of-roundness of the glass container (1).

## Patentansprüche

1. Verfahren zum Identifizieren des Hohlraums einer Maschine zum Formen von Glasbehältern, in der ein Glasbehälter hergestellt wurde, umfassend das Herstellen eines Satzes von Glasbehältern (1), wobei jeder der Glasbehälter (1) einen Code (C) aufweist, der den Hohlraum (33) der Formmaschine (31) in der der Glasbehälter (1) hergestellt wurde, identifiziert, **dadurch gekennzeichnet, dass** das Verfahren Folgendes umfasst:
• für jeden Behälter (1) des Satzes von Glasbehältern (1):
∘ Bestimmen eines charakteristischen Parameters des Glasbehälters (1) und
∘ Einlesen des Codes (C), der den Hohlraum (33) der Formmaschine (31), in der der Glasbehälter (1) hergestellt wurde, identifiziert,
• Durchführen einer Klassifizierung des Satzes von Glasbehältern (1), die Folgendes umfasst:
o in Beziehung setzen jedes Glasbehälters (1) mit seinem charakteristischen Parameter und
o in Beziehung setzen jedes charakteristischen Parameters mit dem Hohlraum (33) der Formmaschine (31), in der der Glasbehälter (1) hergestellt wurde,
• Herstellen eines neuen Glasbehälters (1),
• Bestimmen des charakteristischen Parameters des neuen Glasbehälters (1) und
• Vergleichen des charakteristischen Parameters des neuen Glasbehälters (1) mit der Klassifizierung des Satzes von Glasbehältern (1) und Identifizieren des Hohlraums (33), in dem der neue Glasbehälter (1) hergestellt wurde, basierend auf dem genannten Vergleich.

2. Verfahren nach Anspruch 1, wobei die Klassifizierung des Satzes von Glasbehältern (1) und der Vergleich des charakteristischen Parameters des neuen Glasbehälters (1) mit der Klassifizierung des Satzes von Glasbehältern (1) mittels eines maschinellen Lernsystems mit einem Algorithmus für überwachtes Lernen erfolgt.

3. Verfahren nach Anspruch 1 oder 2, wobei der charakteristische Parameter des neuen Glasbehälters (1) mit allen charakteristischen Parametern aus der Klassifizierung des Satzes von Glasbehältern (1) verglichen wird und der Hohlraum (33) der Formmaschine (31) mit dem charakteristischen Parameter, der den charakteristischen Parametern des Satzes von Glasbehältern (1) aus der Klassifizierung am nächsten kommt, dem neuen Glasbehälter (1) zugewiesen wird.

4. Verfahren nach einem der vorstehenden Ansprüche, ferner umfassend das Einlesen des Codes (C) des neuen Glasbehälters (1), der den Hohlraum (33), in dem der neue Behälter (1) hergestellt wurde, identifiziert, und das Vergleichen des genannten Codes (C) mit dem Hohlraum (33), der mit dem Verfahren aus dem Vergleich des charakteristischen Parameters des neuen Glasbehälters (1) mit den charakteristischen Parametern des Satzes von Glasbehältern (1) aus der Klassifizierung identifiziert wurde.

5. Verfahren nach einem der vorstehenden Ansprüche, wobei die Klassifizierung des Satzes von Glasbehältern (1) dynamisch ist, wobei der charakteristische Parameter jedes neu hergestellten Glasbehälters (1) der Klassifizierung hinzugefügt wird und der charakteristische Parameter jedes neuen Glasbehälters (1) mit dem Hohlraum (33) der Formmaschine (31), in dem jeder neue Glasbehälter (1) hergestellt wurde, in Beziehung gesetzt wird.

6. Verfahren nach dem vorstehenden Anspruch, wobei der charakteristische Parameter eines neu hergestellten Glasbehälters (1) an der letzten Stelle der Klassifizierung des Satzes von Glasbehältern (1) gespeichert wird und der charakteristische Parameter des Glasbehälters (1) an der ersten Stelle der Klassifizierung aus der Klassifizierung entfernt wird.

7. Verfahren nach einem der vorstehenden Ansprüche, wobei sich der Satz von Glasbehältern (1) aus der Herstellung von mindestens zehn Glasbehältern (1) für jeden Hohlraum (33) der Formmaschine (31) ergibt.

8. Verfahren nach dem vorstehenden Anspruch, wobei sich der Satz von Glasbehältern (1) aus der Herstellung von 200 bis 250 Glasbehältern (1) für jeden Hohlraum (33) der Formmaschine (31) ergibt.

9. Verfahren nach einem der vorstehenden Ansprüche, wobei bei veränderten Produktionsbedingungen der Behälter (1) die Klassifizierung durch Speicherung neuer Werte charakteristischer Parameter aktualisiert wird.

10. Verfahren nach einem der vorstehenden Ansprüche, wobei der charakteristische Parameter die Wanddicke des Glasbehälters (1) ist.

11. Verfahren nach dem vorstehenden Anspruch, wobei die Dicke in verschiedenen Höhen des Glasbehälters (1) bestimmt wird.

12. Verfahren nach Anspruch 10 oder 11, wobei die geringste Dicke, die stärkste Dicke und die mittlere Dicke bestimmt werden.

13. Verfahren nach einem der vorstehenden Ansprüche, wobei der charakteristische Parameter die Unrundheit des Glasbehälters (1) ist.

## Revendications

1. Procédé d'identification de la cavité d'une machine de formage de récipients en verre dans laquelle un récipient en verre a été fabriqué, qui comprend la fabrication d'un ensemble de récipients en verre (1), dans lequel chacun des récipients en verre (1) a un code (C) qui identifie la cavité (33) de la machine de formage (31) dans laquelle le récipient en verre (1) a été fabriqué, **caractérisé en ce que** le procédé comprend:
• pour chaque contenteur (1) de l'ensemble des récipients en verre (1):
∘ déterminer un paramètre caractéristique du récipient en verre (1), et
∘ lire le code (C) qui identifie la cavité (33) de la machine de formage (31) dans laquelle le récipient en verre (1) a été fabriqué,
• effectuer une classification de l'ensemble de récipients en verre (1) qui comprend:
∘ relier chaque récipient en verre (1) à son paramètre caractéristique, et
∘ relier chaque paramètre caractéristique à la cavité (33) de la machine de formage (31) dans laquelle le récipient en verre (1) a été fabriqué,
• la fabrication d'un nouveau récipient en verre (1),
• déterminer le paramètre caractéristique du nouveau récipient en verre (1), et
• comparer le paramètre caractéristique du nouveau récipient en verre (1) avec la classification de l'ensemble des récipients en verre (1), et identifier la cavité (33) dans laquelle le nouveau récipient en verre (1) a été fabriqué sur la base de cette comparaison.

2. Procédé selon la revendication 1, dans lequel la classification de l'ensemble de récipients en verre (1) et la comparaison du paramètre caractéristique du nouveau récipient en verre (1) avec la classification de l'ensemble de récipients en verre (1) sont effectuées au moyen d'un système d'apprentissage automatique utilisant un algorithme d'apprentissage supervisé.

3. Procédé selon la revendication 1 ou 2, dans lequel le paramètre caractéristique du nouveau récipient en verre (1) est comparé à tous les paramètres caractéristiques de la classification de l'ensemble des récipients en verre (1), et la cavité (33) de la machine de formage (31) ayant le paramètre caractéristique le plus proche des paramètres caractéristiques de l'ensemble des récipients en verre (1) de la classification est attribuée au nouveau récipient en verre (1).

4. Procédé selon l'une quelconque des revendications précédentes, qui comprend en outre la lecture du code (C) du nouveau récipient en verre (1) qui identifie la cavité (33) dans laquelle le nouveau récipient (1) a été fabriqué, et la comparaison dudit code (C) avec la cavité (33) qui a été identifiée avec le procédé à partir de la comparaison du paramètre caractéristique du nouveau récipient en verre (1) avec les paramètres caractéristiques de l'ensemble des récipients en verre (1) de la classification.

5. Procédé selon l'une quelconque des revendications précédentes, dans lequel la classification de l'ensemble des récipients en verre (1) est dynamique, dans lequel le paramètre caractéristique de chaque nouveau récipient en verre fabriqué (1) est ajouté à la classification, et le paramètre caractéristique de chaque nouveau récipient en verre (1) est lié à la cavité (33) de la machine de formage (31) dans laquelle chaque nouveau récipient en verre (1) a été fabriqué.

6. Procédé selon la revendication précédente, dans lequel le paramètre caractéristique d'un nouveau récipient en verre fabriqué (1) est stocké dans la dernière position de la classification de l'ensemble de récipients en verre (1), et le paramètre caractéristique du récipient en verre (1) dans la première position de la classification est supprimé de la classification.

7. Procédé selon l'une quelconque des revendications précédentes, dans lequel l'ensemble de récipients en verre (1) est obtenu par la fabrication d'au moins dix récipients en verre (1) pour chaque cavité (33) de la machine de formage (31).

8. Procédé selon la revendication précédente, dans lequel l'ensemble de récipients en verre (1) est obtenu par la fabrication de 200 à 250 récipients en verre (1) pour chaque cavité (33) de la machine de formage (31).

9. Procédé selon l'une quelconque des revendications précédentes, dans lequel la classification est mise à jour en stockant de nouvelles valeurs de paramètres caractéristiques lorsque les conditions de production des conteneurs (1) changent.

10. Procédé selon l'une quelconque des revendications précédentes, dans lequel le paramètre caractéristique est l'épaisseur de la paroi du récipient en verre (1).

11. Procédé selon la revendication précédente, dans laquelle l'épaisseur est déterminée à différentes hauteurs du récipient en verre (1).

12. Procédé selon la revendication 10 ou 11, dans laquelle on détermine l'épaisseur minimale, l'épaisseur maximale et l'épaisseur moyenne.

13. Procédé selon l'une quelconque des revendications précédentes, dans lequel le paramètre caractéristique est l'ovalisation du récipient en verre (1).
